(19) Europäisches Patentamt

European Patent Office

Office européen des brevets

(11) EP 1 424 652 A2

(12) EUROPEAN PATENT APPLICATION

(43) Date of publication:
02.06.2004 Bulletin 2004/23

(51) Int Cl.⁷: G06T 11/60

(21) Application number: 03026682.9

(22) Date of filing: 20.11.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 26.11.2002 JP 2002342071

(71) Applicant: MATSUSHITA ELECTRIC INDUSTRIAL CO., LTD.
Kadoma-shi, Osaka 571-8501 (JP)

(72) Inventors:
• Nishi, Takaaki
Iizuka-Shi Fukuoka-Ken 820-0054 Iizuka (JP)

• Imagawa, Kazuyuki
Fukuoka-Shi Fukuoka-Ken, 810-0015 (JP)
• Matsuo, Hideaki
Yokohama-Shi Kanagawa-Ken, 224-0004 (JP)
• Nishimura, Makoto
Machida-Shi Tokyo, 194-0011 Machida (JP)
• Morita, Kaoru
Yokohama-Shi Kanagawa-Ken, 235-0021 (JP)
• Yamamoto, Takeshi
Yokohama-Shi Kanagawa-Ken, 241-0801 (JP)

(74) Representative: Balsters, Robert et al
Novagraaf International S.A.
25, avenue du Pailly
1220 Les Avanchets - Geneva (CH)

(54) **Method and apparatus for adding ornaments to an image of a person**

(57) An image processing apparatus comprises: an image storing unit (4) operable to store an input image; a template storing unit (6) operable to store at least one template of a body part area; a detecting unit (7) operable to detect a location of and a size of the body part area out of the input image stored in the image storing unit (4), by using the at least one template of the body part area stored in the template storing unit (6); an ornament information storing unit (5) operable to store ornament information of the ornament having a reference point; and an image composition unit (9) operable to scale the ornament in accordance with the size of the body part area detected by the detecting unit (7), the image composition unit (9) operable to locate a reference point of the scaled ornament so as to fit with a position of the body part area detected by the detecting unit (7), and the image composition unit (9) further operable to compose the scaled ornament and the input image stored in the image storing unit (4).

Fig. 3

```
        start
          │
    ┌───────────┐
    │ inputting │     step 1
    │   image   │
    └───────────┘
          │
    ┌───────────┐
    │displaying │     step 2
    │   image   │
    └───────────┘
          │
          ▼  ◄──────┐
        ◇◇◇◇◇       │
      ◇ selecting ◇ │ step 3
      ◇ ornament  ◇─┘  N
        ◇◇◇◇◇
          │ Y
    ┌───────────┐
    │ detecting │     step 4
    │   face    │
    └───────────┘
          │
    ┌───────────┐
    │  storing  │
    │ detection │     step 5
    │  result   │
    └───────────┘
          │
    ┌───────────┐
    │  sizing   │     step 6
    │ ornament  │
    └───────────┘
          │
    ┌───────────┐
    │ composing │     step 7
    │   image   │
    └───────────┘
          │
    ┌───────────┐
    │displaying │
    │composition│     step 8
    │   image   │
    └───────────┘
          │
         end
```

EP 1 424 652 A2

**EP 1 424 652 A2**

### Description

The present invention relates to an image processing method and image processing apparatus built in an image data-treating communication device (for example, a TV phone, a TV conference system, a video mail system, a video chat system, an intercom, etc.), more particularly relates to an image processing apparatus editing a personal image (for example, a facial image of a user, a whole-body image of the user, etc.).

There is an amusement apparatus that prints and outputs an image of a user to various kinds of print media. The amusement apparatus laps a frame of ornaments (for example, a design, a pattern, etc.) on a personal image to compose a composite image, and outputs the composite image to print media (for example, sticker etc.).

Such amusement apparatus does not have a function to adjust a positional relationship of the personal image and the ornament, in itself. Therefore, even when a user arranges the personal image to be settled in an ornament frame, the ornament may overlap with the personal image, so that a face part, or a head part, etc. becomes invisible and the personal image becomes unclear.

Considering the above-mentioned point, reference 1 (published Japanese Patent Application Laid-Open No. 2000-22929) has proposed an art that adds an ornament to a personal image, after adjusting the ornament not to overlap with a body part of a personal image, especially with a body part area corresponding to a face and a head.

Recently, a camera-built-in cellular phone provided with a function to lap an ornament frame on a personal image to compose a composite image, and to transmit the composite image is put in practical use. When a transmitter uses such a camera-built-in cellular phone, a receiver can enjoy seeing the image that the transmitter has edited.

There is a request not to make the ornament not lap over the personal image, but rather positively, to make all or a part of the ornament lap over the personal image in an appropriate position and size.

Such ornament is an image pertaining to a person; an image that expresses feelings of the person (for example, tears (sadness), wrinkles of a forehead (anger or dissatisfaction), etc.), and an image that expresses personal belongings (for example, a hat, glasses, false mustache, a necklace, etc.).

In such a case, with the prior art, there is a problem that a user has to input a position and a size of an ornament that should be arranged, by a keystroke one by one, which results in a very complicated operation.

An object of the present invention is to provide an image processing method that can arrange an ornament to a personal image in an appropriate position and in an appropriate size, without a complicated operation to be performed by a user, and an art related thereto.

A first aspect of the present invention provides an image processing method comprising: establishing an inseparable relation between an ornament and arrangement information of the ornament in a body part area; setting a location of the body part area in an input image; setting arrangement of the ornament so as to fit with the set location of the body part area using the arrangement information related to the ornament; composing the ornament and the input image to generate an ornament-arranged output image, and outputting the ornament-arranged output image.

According to the method described above, an ornament is composed in an appropriate position of the input image by inseparably relating the ornament with the arrangement information of the ornament in the body part area. Under the present circumstances, a user does not need to specify the position one by one, at which the ornament should be placed, but needs only to indicate which ornament is used. Therefore, this method is very easy to operate.

A second aspect of the present invention provides an image processing method as defined in the first aspect, further comprising: setting a size of the body part area in the input image; and fitting the ornament to the input image in size, based on the set size of the body part area.

According to the method described above, a user does not need to perform sizing of the input image and the ornament one by one, therefore, operability can be improved.

A third aspect of the present invention provides an image processing method as defined in the first aspect, wherein the ornament is treated in a form of an image file and the arrangement information of the ornament in the body part area is included in attribute information of the image file.

According to the method described above, the ornament and the arrangement information related to the ornament can be handled easily. For example, by transferring (for example, downloading) the above-mentioned image file from a certain position (for example, from a WEB server) to another position (for example, to a client machine), the ornament and the arrangement information related with the ornament can be transmitted as one. Upon receiving the transferred image file, a user of a destination can immediately perform composition that reflects the arrangement information, without indicating the position that the ornament should be placed.

A fourth aspect of the present invention provides an image processing method as defined in the third aspect, wherein the attribute information is placed in an extended region of the image file.

According to the method described above, the arrangement information can be stored in one image file, without occupying other areas of the image file.

A fifth aspect of the present invention provides an image processing method as defined in the first aspect, wherein the ornament is treated in a form of an image file and the arrangement information of the ornament in the body part area is included in a name of the image file.

According to the method described above, even if the image file is in a format without an extended area, the arrangement information can be stored. The image file can store the arrangement information in the file name that the image file has originally. As a result, size expansion of the image file can be restrained.

A sixth aspect of the present invention provides an image processing method as defined in the first aspect, wherein the ornament is treated in a form of an image file and the arrangement information of the ornament in the body part area is included in another file inseparably related to the image file.

According to the method described above, the arrangement information can be edited by editing only the file that has the arrangement information, without opening the image file.

A seventh aspect of the present invention provides an image processing method as defined in the first aspect, wherein the arrangement information of the ornament in the body part area includes information of an ornament reference point.

According to the method described above, using the reference point of the ornament, the arrangement of the ornament can be expressed briefly.

An eighth aspect of the present invention provides an image processing method as defined in the second aspect, wherein the arrangement information of the ornament in the body part area includes scaling information defining a relation between a size of the body part area and a size of the ornament.

According to the method described above, a processing in sizing can be simplified.

A ninth aspect of the present invention provides an image processing method as defined in the first aspect, wherein the body part area is a face area of a person photographic object.

According to the method described above, an image in which the face area is chosen as the body part area becomes more interesting, since the face may vividly expresses the person's intention and feeling. In addition, because a reference point is on an ornament, the ornament can be attached in an appropriate position of the face area in an appropriate size. For example, an ornament of a hat can be attached in a position of the head of the face area.

A tenth aspect of the present invention provides an image processing method as defined in the seventh aspect, wherein the ornament reference point is one of an upper left comer point, an upper side middle point, an upper right comer point, a left side middle point, the central point, the center of gravity, a right side middle point, a lower left comer point, a lower side middle point, and a lower right comer point.

According to the method described above, arranging the ornament in an input image can be performed according to a characteristic of the ornament.

An eleventh aspect of the present invention provides an image processing method as defined in the first aspect, wherein the ornament is at least one of an image expressing personal feelings and an image expressing personal belongings.

According to the method described above, there are ways to make an image interesting by adding a feeling expression to an input image, or by variously changing accessories. In other words, pleasure like a simple fashion show can be enjoyed.

The above, and other objects, features and advantages of the present invention will become apparent from the following description read in conjunction with the accompanying drawings, in which like reference numerals designate the same elements.

Fig. 1 is a functional block diagram, illustrating how an image processing apparatus functions according to the first embodiment of the present invention;

Fig. 2 is a block diagram, illustrating the image processing apparatus according to the first embodiment of the present invention;

Fig. 3 is a flowchart, illustrating the image processing apparatus according to the first embodiment of the present invention;

Figs. 4 (a) to (c) are illustrations, showing templates according to the first embodiment of the present invention;

Fig. 5 is an explanatory diagram, illustrating pattern matching according to the first embodiment of the present invention;

Fig. 6 is an illustration, showing a face area detection result according to the first embodiment of the present invention;

Fig. 7 is an explanatory diagram, illustrating each point of a face area according to the first embodiment of the present invention;

Fig. 8 is an illustration, showing an ornament according to the first embodiment of the present invention;

Figs. 9 (a) to (i) are illustrations, showing ornaments according to the first embodiment of the present invention;

Fig. 10 is an illustration, showing a resultant composite image according to the first embodiment of the present invention;

Fig. 11 is a functional block diagram, illustrating how an image processing apparatus functions according to the second embodiment of the present invention;

Fig. 12 is a flowchart, illustrating the image processing apparatus according to the second embodiment of the present invention;

Fig. 13 is an illustration, showing a frame image according to the second embodiment of the present invention;

Figs. 14 (a) to (i) are illustrations, showing frame images according to the second embodiment of the present invention; and

Figs. 15 (a) to (c) are illustrations, showing resultant composite images according to the second embodiment of the present invention.

Hereinafter, a description is given of the embodiments of the present invention with reference to the accompanying drawings. Prior to detailed description of constructions, important terms are explained.

A "personal image" is an image that contains a part or a whole image of a person. Therefore, an image may be a whole-body image, a facial image, an image of a sight of a person's back, or the upper half of the body. The image may also be a photograph including two or more people. Any kind of patterns, such as scenery and a design other than a person, may comprise a background.

A "body part" means a part of a person's body. The part of the person's body is included in the body part, when the part can be recognized as the part of the person's body, even when the body part is invisible because the skin of the body part is equipped with dress, a hat, or shoes. Therefore, a face is a body part and a head is also a body part. An eye, a nose, a mouth, an ear, eyebrows, hair, a head, the upper half of the body with dress, a hand, an arm, a leg, feet with shoes, a head with a hat, eyes with glasses are also body parts.

A "body part area" is an area defined as an area which the body part occupies in the personal image. The body part area may include, within itself, a part that is not the body part, and may be an area that is located inside the body part.

Suppose that the body part is a face, the body part area may include an area in the circumference of the face, or the body part area may include a minimum-sized rectangle surrounding eyes, a mouth, and a nose, but not containing a forehead and ears.

An "ornament" may be an image pattern to be added. The image pattern may be an image pattern that is stored in advance, or may be an image pattern generated with computer graphics technique. The image pattern may be a pattern of a character, a pattern of a symbol, and a pattern of a figure.

"Personal belongings" have a broader sense than a general meaning, including clothes, a life supply, goods for hobby and amusement, sporting goods, stationery, a small machinery, etc.

"Arrangement information" is information determining where to arrange an ornament in a body part area in what size, including information regarding a reference point of the ornament and scaling information defining a relation between a size of the body part area and a size of the ornament. Here, the ornament may be arranged outside the body part area. In this case, it is preferable to define a distance between the ornament and the body part area, and to include the distance in the "arrangement information."

In the present embodiment, the point is that an ornament is indivisibly related with arrangement information of the ornament in a body part area. Specifically, there are the following three ways of how to maintain information. Any way may be adopted.

(Example 1) An ornament is treated in a form of an image file, the arrangement information of the ornament in a body part area is included in attribute information of the image file, and the attribute information is placed in an extended area of the image file.

(Example 2) An ornament is treated in a form of an image file, and the arrangement information of the ornament in a body part area is included in a file name of the image file.

(Example 3) An ornament is handled in a form of an image file, and the arrangement information of the ornament in a body part area is included in another file that is indivisibly related to the image file.

The above-mentioned (Example 1) to (Example 3) are examples to illustrate. As long as the ornament is indivisibly related to the arrangement information of the body part area of the ornament, other optional ways of how to maintain information may be adopted.

As long as the ornament and the arrangement information are indivisibly related, relationship between the ornament and the arrangement information may not be limited to only one-to-one correspondence, but the relationship may be, for example, one-to-many correspondence or many-to-one correspondence.

An ornament does not need to be in a form of an image file, but may be an image pattern outputted by computer graphics software and a program, or may be expressed with descriptive language.

Regarding a frame image, the "ornament" is replaced with a "frame image," and "arrangement information of the ornament in a body part area" is replaced with "arrangement information of the frame in a frame image," in the above-described sentences.

(Embodiment 1)

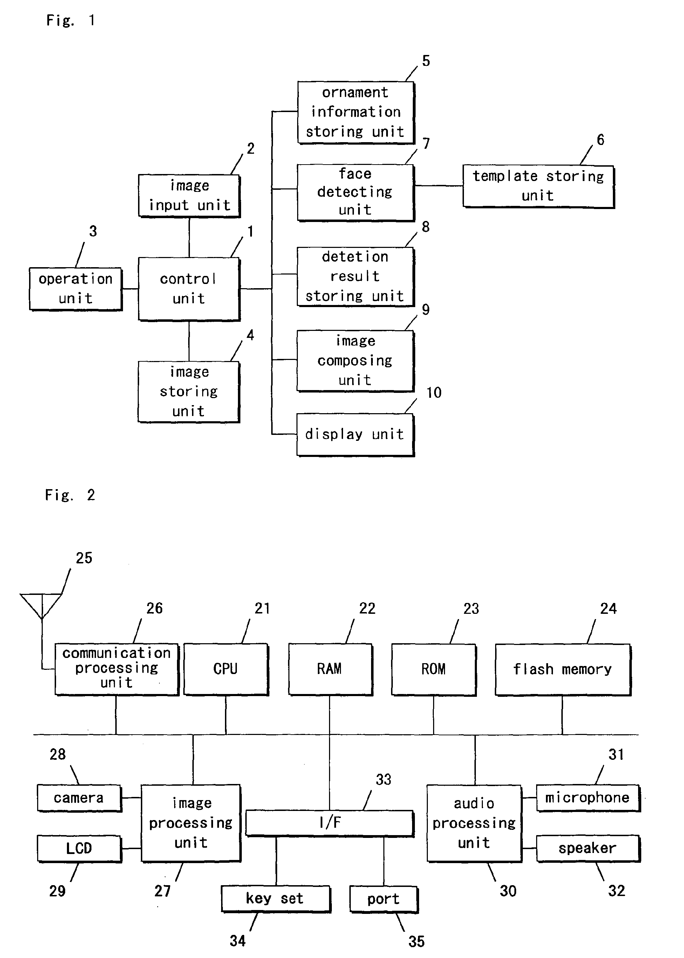

Fig. 1 is a functional block diagram, illustrating how an image processing apparatus functions in the first embodiment of the present invention. As shown in Fig. 1, the image processing apparatus of the present embodiment has the following components.

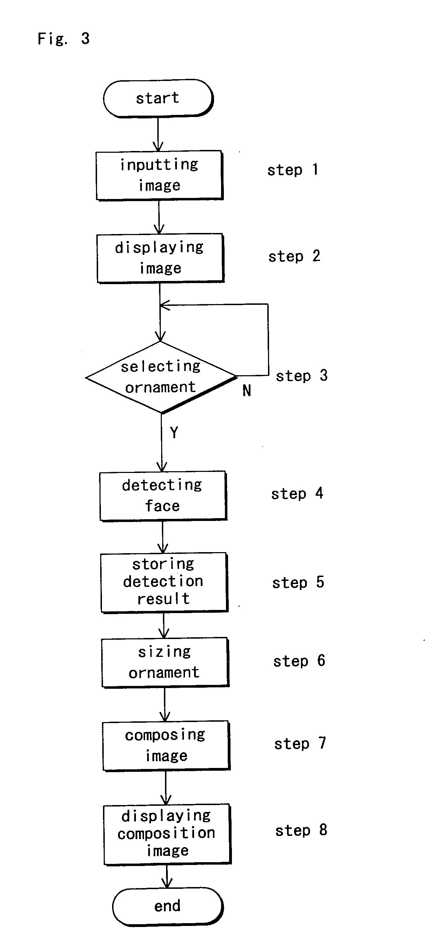

A control unit 1 controls each element shown in Fig. 1 along with a flowchart as shown in Fig. 3.

An image input unit 2 obtains an input image. The input image may be a still image and may be an image for one frame of a moving image. Furthermore, the input image may be an image immediately after taken with a camera, or an image that is decoded from an encoded data of a camera-taken image according to coding methods, such as JPEG and MPEG. (The encoded data may be loaded from a recording medium, or may be received from a communication device.)

A display unit 10 consists of a display device that displays an input image that is inputted by the image input unit 2 and stored in an image storing unit 4, and a composite image that an image composing unit 9 has composed an image of an ornament and the input image.

An operation unit 3 receives input information from a user. In particular, the user inputs, using the operation unit 3, information that which ornament information the user uses among a series of the ornament information stored in an ornament information storing unit 5. The image storing unit 4 stores an input image that the image input unit 2 inputs.

A template storing unit 6 stores templates of a body part area. Hereafter, in the present embodiment, a face area is discussed as an example of the body part area. However, the following discussion is applicable for other body part areas, such as a hand as well.

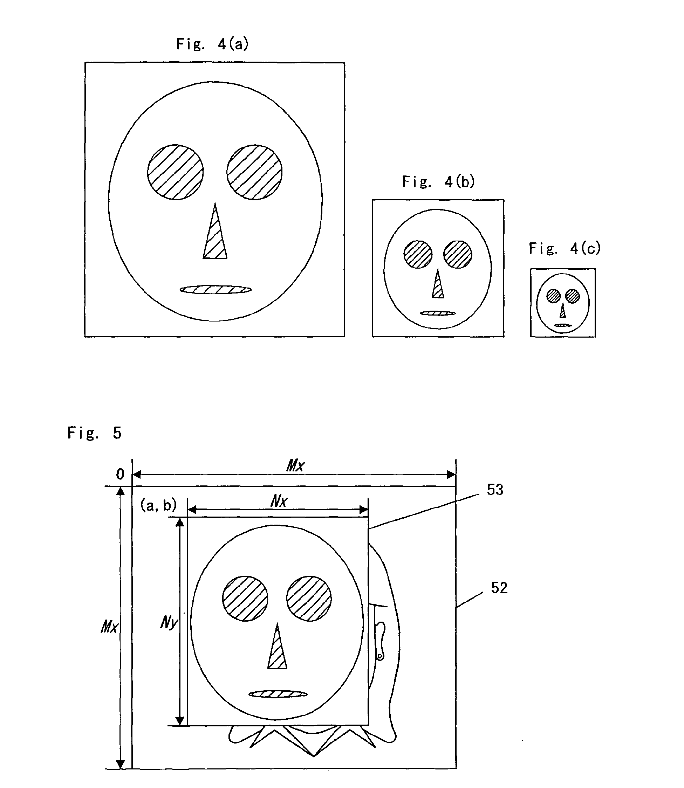

As shown in Figs. 4 (a), (b), and (c), templates made by each modeled outline of face parts (a head, eyes, a nose, and a mouth) are prepared in different sizes for use.

In Fig. 1, a face detecting unit 7 corresponds to the detecting unit described in the claims of the present invention. The face detecting unit 7 detects a position of and a size of a body part area from the input image stored in the image storing unit 4, using the templates stored in the template storing unit 6.

Here, as shown in Fig. 5, the face detecting unit 7 extracts an edge component, filtering the input image stored in the image storing unit 4 with a differential filter. The face detecting unit 7 selects a template 53 from the template storing unit 6, and performs pattern matching using the selected template 53 and the edge component.

The pattern matching is a processing which moves the template 53 (Nx * Ny pixels) over a search area (Mx - Nx + 1) (My - Ny + 1) in an input image (Mx * My pixels) which is larger than the template, and searches the upper left position (a, b) of the template at which the residual R given by the following equation becomes minimum. Here, the symbol "*" indicates multiplication.

[Equation 1]

$$R(a,b) = \sum_{m_y=0}^{Ny-1} \sum_{m_x=0}^{Nx-1} \left| I_{(a,b)}(m_x, m_y) - T(m_x, m_y) \right|$$

In Equation 1, I (a, b) (mx, my) is a partial image of an input image, and T (mx, my) is an image of the template 53.

Instead of Equation 1, the upper left position (a, b) of the template may be searched by calculating a cross-correlation coefficient C defined by Equation 2, and finding a maximum value for the cross-correlation coefficient C.

[Equation 2]

$$C(a,b) = \sum_{m_y=0}^{N_y-1}\sum_{m_x=0}^{N_x-1} \frac{\{I(a,b)(m_x,m_y)-\bar{I}\}\{T(m_x,m_y)-\bar{T}\}}{\sqrt{I_{\sigma ab}T_\sigma}}$$

$$\bar{I} = \frac{1}{N_x N_y}\sum_{m_y=0}^{Ny-1}\sum_{m_x=0}^{Nx-1}I_{(a,b)}(m_x,m_y)$$

$$\bar{T} = \frac{1}{N_x N_y}\sum_{m_y=0}^{Ny-1}\sum_{m_x=0}^{Nx-1}T(m_x,m_y)$$

$$I_{\sigma ab} = \frac{1}{N_x N_y}\sum_{m_y=0}^{Ny-1}\sum_{m_x=0}^{Nx-1}\{I_{(a,b)}(m_x,m_y)-\bar{I}\}^2$$

$$T_\delta = \frac{1}{N_x N_y}\sum_{m_y=0}^{Ny-1}\sum_{m_x=0}^{Nx-1}\{T(m_1,n_1)-\bar{T}\}^2$$

The face detecting unit 7 uses the templates shown in Fig. 4. When the face detecting unit 7 uses Equation 1, the face detecting unit 7 finds a template with which the residual R becomes minimum. When the face detecting unit 7 uses Equation 2, the face detecting unit 7 finds a template with which the correlation coefficient C becomes maximum. The face detecting unit 7 regards the values of the position and the size of the matched template as the values of the position and the size of the face area in the input image.

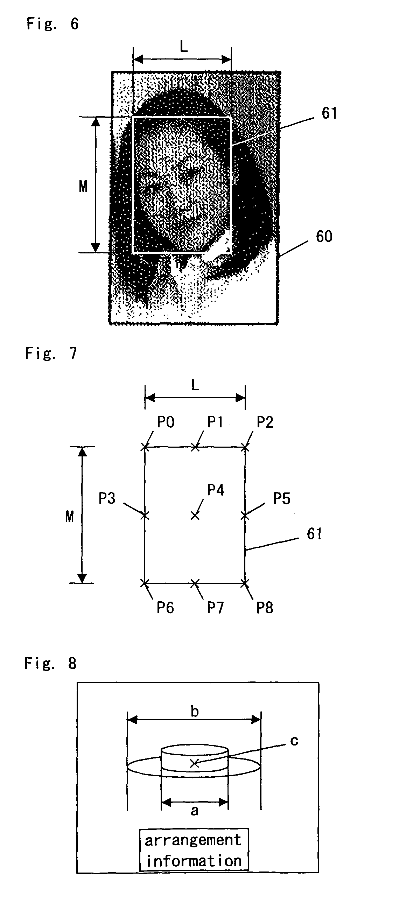

The processing of the face area in the present embodiment is explained using Figs. 6 and 7. Fig. 6 shows an example of a detection result of the face area. A rectangular face area 61 is detected from an input image 60.

In the present embodiment, the face detecting unit 7 determines, using the template mentioned above, a coordinate of the upper left comer point, a lateral length L and a longitudinal length M of the rectangular face area 61.

As shown in Fig. 7, in the present embodiment, the face detecting unit 7 determines the positions of nine points in total regarding the rectangular face area from the values mentioned above. The nine points are the upper left comer point P0, the upper side middle point P1, the upper right comer point P2, the left side middle point P3, the center (or the center of gravity) P4, the right side middle point P5, the lower left comer point P6, the lower side middle point P7, and the lower right comer point P8.

In the present embodiment, a reference point of the ornament as described later is set at one of the above-mentioned nine points or at a proportionally allotted point for plural points arbitrarily chosen from the above-mentioned nine points.

According to the relationship, the reference point of the ornament becomes an appropriate position of the face area, just by adjusting the reference point of the ornament to the set point as mentioned above.

Selection of the set point mentioned above is just one example; therefore the point can be arbitrarily changed as long as the scope or spirit of the present invention is not changed.

When plural faces exist in the image, the face detecting unit 7 detects, as the face part area of a second person, a position of the lowest residual R or the highest correlation coefficient C within the input image area from which the already detected face part area as the first person is excluded.

Similarly, for a face of a third person and on, the detecting unit 6 detects repeatedly, as the face part area, the low position of the residual R and the high position of the correlation coefficient C in the area repeatedly subtracted for the previously detected face part areas, until the residual R becomes larger than a previously defined threshold or until the correlation coefficient C becomes smaller than a previously defined threshold. In this way, face part areas for plural persons are detectable.

In the present embodiment 1, it is desirable to detect not only the face areas, but also each area for face parts (for example, a right eye, a left eye, a nose, a mouth, both eyes, a right cheek, a left cheek, both cheeks, etc.). This point is different from the embodiment 2 that will be described later. Thereby, the ornament can be arranged in more detailed manner.

As for the face parts, when a template is prepared, a position and a size of the face parts are individually detectable in a similar way as the face area. Therefore, detailed explanation is omitted. After detecting only the face area, the size and the position of the face parts may be assumed, for example, by proportionally allotting the position and the size of the face part to the position and the size of the face area that is detected.

As described above, the face detecting unit 7 determines the position and the size and stores the result into the detection result storing unit 8 of Fig. 1.

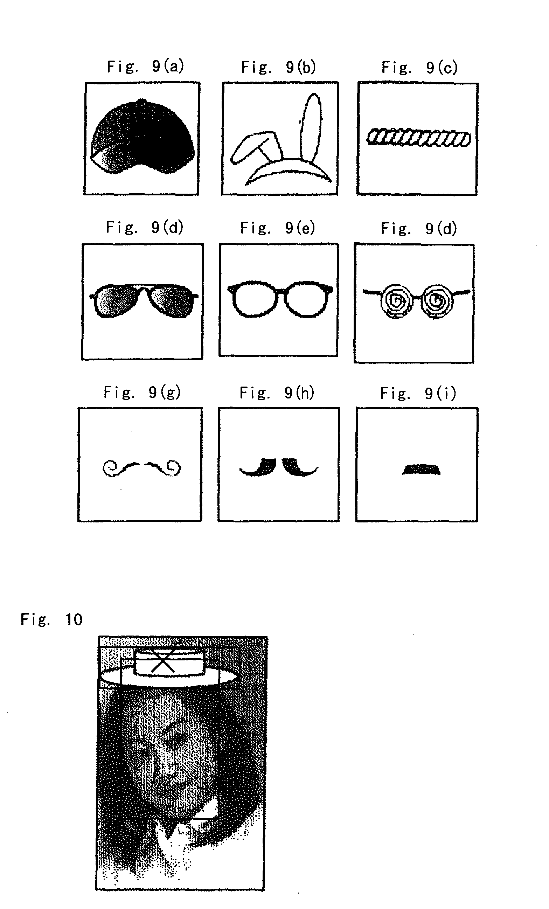

In Fig. 1, an ornament information storing unit 5 stores the ornament information. The ornament information is explained in the following, using Figs. 8 and 9.

In the example (an ornament of a hat) shown in Fig. 8, ornament information consists, in a manner related with each other, of data of an ornamental image (the picture of the hat), size information (diameter a of the body of the hat and diameter b of the brim), the reference point c in the ornament, and the point with which the reference point coincides in the rectangular face area.

Other examples of the ornament include a cap shown in Fig. 9 (a), a headgear shown in Fig. 9 (b), a headband shown in Fig. 9 (c), various kinds of eye glasses or sunglasses shown in Figs. 9 (d) to 9 (f), and mustaches shown in Figs. 9 (g) to 9 (i).

The ornament may be tears, wrinkles between eyebrows, shade of a face, sweat, a mark indicating sunshine, and so on, which express feelings of people, or personal belongings defined previously.

The ornament image data may be a raster image or a vector image.

In Fig. 1, an image composition unit 9 refers to information of the position and the size for the face area that is stored in the detection result storing unit 8.

The image composition unit 9 scales up or down the size of the ornament that is chosen according to the size of the face area, locates the reference point for the ornament so as to fit to the position of the face area, and composes the scaled ornament and the personal image that is stored in the image storing unit.

Locating the reference point and scaling the ornament can be done by easy processing. As for scaling, directivity may be given such that scaling is executed only for the lateral direction but not for the longitudinal direction.

As for the image composition, a scaled ornament may be arranged in the foreground of the personal image, or in the background. A composite image of the scaled ornament and the personal image may be displayed after color mixing with a suitable alpha value.

Processing of the image composition and the ornament scaling is not necessary to be directly performed for the personal image and the ornament image, and may be indirectly performed for the personal image and the ornament image, using description languages such as an SMIL format, a shockwave format, etc.

The resultant example is shown in Fig. 10, when the ornament of the hat shown in Fig. 8 is applied to the face area detection result shown in Fig. 6. It should be understood by examining Fig. 10 that the hat is scaled to the appropriate size (the head size of the person), and is arranged at the appropriated position (the position on top of the head, where the forehead is hidden a little bit by the hat).

Incidentally, in this kind of the image processing, it may happen to have a result such that a hat that is too small to put on the head is arranged in front of a mouth. Such result can not be immediately said an error from the point of view of the image processing itself; however, it is very unrealistic and inappropriate.

Comparing to the unrealistic result mentioned above, the present invention lets a user operate the image processing without complicated procedures. The user may choose the ornament of the hat after the personal image is inputted, and then the composite image as shown in the Fig. 10 is automatically obtained. Therefore, usability can be drastically improved.

Since the ornament and the arrangement information are related to each other inseparably, when the user acquires the ornament, the user acquires the arrangement information at the same time. This point also applies to the case where the ornament is downloaded from a server and the case where the ornament is retrieved from recording media (such as memory card). Therefore, the user needs to only concern about acquiring the ornament and can very easily deal with the ornament and the arrangement information.

Next, an example of detailed construction for the image processing apparatus and the peripheral units shown in Fig. 1 is explained using Fig. 2. Fig. 2 is a block diagram of the image processing apparatus mentioned above.

In the example of Fig. 2, the image processing apparatus of Fig. 1 is installed in a camera-built-in cellular phone. As shown in Fig. 2, the camera-built-in cellular phone has the following elements.

A CPU 21 controls each element of the Fig. 2 via a bus 20 and executes a control program that is stored in a ROM 23, following the flowchart of Fig. 3.

RAM 22 secures a temporary storage area that the CPU 22 requires for the processing.

A flash memory 24 is a device equivalent to the recording medium.

A communication processing unit 26 performs transmission and reception of data with an external communication device via an antenna 25.

An image processing unit 27 consists of an encoder/a decoder according to coding methods, such as JPEG and MPEG, processes the image (a still image or a moving image) that a camera 28 photographed, or controls the display status of an LCD 29 (an example of a display device) based on the image data directed by the CPU 21.

An audio processing unit 30 controls the input from a microphone 31, and the audio output via a speaker 32.

The bus 20 is connected to an interface 33, and the user can input operation information by a key set 34 via the interface 33. The user can connect other devices via a port 35.

A function of the image input unit 2 in Fig. 1 is realized by the process that the CPU 21 or the image processing unit 27 performs for data that is stored in the flash memory 24 or for data that the camera 28 photographed.

Functions of the control unit 1, the face detecting unit 7 and the image composing unit 9 are realized by the process that the CPU 21 performs, by exchanging data with the RAM 22, the flash memory 24 and so on.

The image storing unit 4, the template storing unit 6, the ornament information storing unit 5, and the detection result storing unit 8 are equivalent to the area secured in the RAM 22, the ROM 23 or the flash memory 24. The key set 34 of Fig. 2 is equivalent to the operation unit 3 of Fig. 1.

The CPU 21 performs recognition of the operation that the user performs on the key set 34, acquisition of an image from the camera 28, compression of the camera image and saving into the flash memory 24, loading and extension of the saved image, image composition, image reproduction, and displaying on the LCD 29. The image processing unit 27 may perform some items of the above-described processing.

Next, using Fig. 3, the flow of processing in the image processing apparatus according to the present embodiment is explained.

In Step 1, the control unit 1 controls the image input unit 2 to store the input image in the input image storing unit 4 via the image input unit 2 and the control unit 1.

In Step 2, the control unit 1 orders the display unit 10 to display the input image that is stored in the image storing unit 4, and then the input image is displayed on the display unit 10.

In Step 3, the control unit 1 waits for the user to input information that describes which ornament should be used.

When the user inputs the information by using the operation unit 3, the control unit 1 orders the face detection unit 7 to detect the face area in Step 4. Thereby, the face detecting unit 7 detects the position and the size of the face area by using the templates that are stored in the template storing unit 6, and stores the detection result into the detection result storing unit 8 in Step 5.

When all the processing mentioned above are completed, the image composing unit 9 scales up or down the ornament image according to the size of the face area in Step 6. In Step 7, the image composing unit 9 composes the scaled ornament image and the input image so as to locate the reference point of the ornament at the corresponding point of the face area, and then stores the composite image in the image storing unit 4. In Step 8, the control unit 1 orders the display unit 10 to display the composite image.

In Steps from 2 to 5, the face detection may be performed in advance of or at the same time of selecting the ornament.

In advance of selecting the ornament, if the face detection is started by using time when the user thinks which ornament should be used (it is wasteful time for the information processing apparatus), the face detection seems for the user as if it has completed within the short period of time.

In Steps 6 to 7, the ornament image can be scaled after or at the same time of locating the reference point for the ornament.

(Embodiment 2)

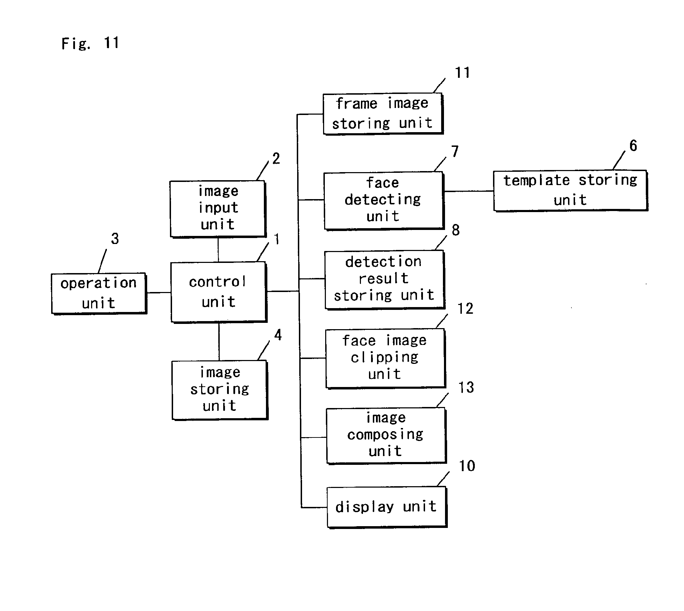

The embodiment 2 of the present invention is explained using Figs. 11 to 15. Fig. 11 is a functional block diagram of the image processing apparatus in the embodiment 2 of the present invention.

In Fig. 11, explanation is omitted by attaching the same symbols regarding the same contents as the embodiment 1. However, a face detecting unit 7 and a template storing unit 6 differ from the embodiment 1. The face detecting unit 7 and the template storing unit 6 need to be applicable only to the face area and the face parts are not necessary to be considered.

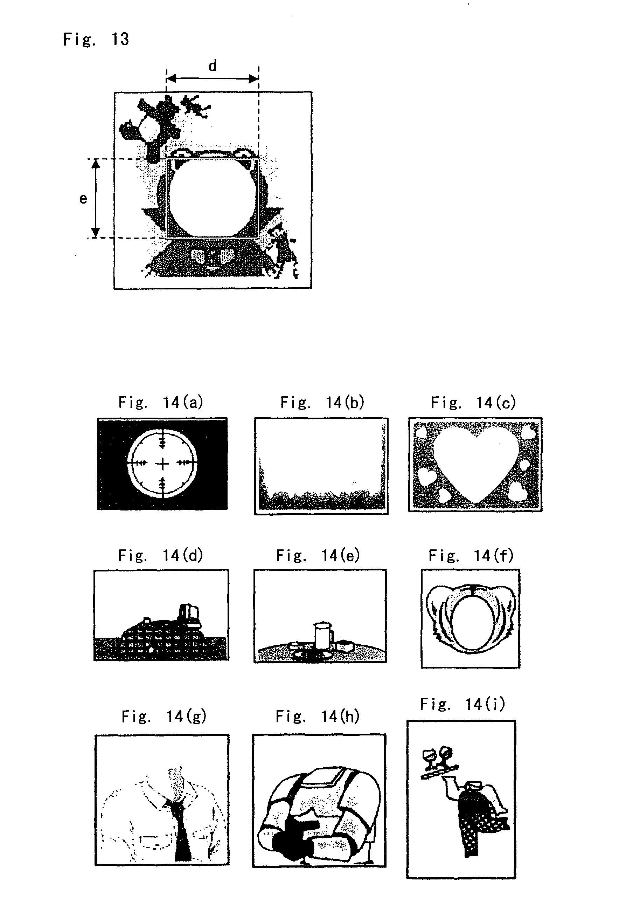

A frame image storing unit 11 stores a frame image with a frame in which a face image is inserted, as shown in Fig. 13. A frame with a lateral length d and a longitudinal length e is provided in the frame image shown in Fig. 13.

After the size is adjusted, the image of the face area is inserted within the frame.

Frame images may include the images shown in Figs. 14 (a) to (i). As shown in Fig. 13, "frame" is not limited to the one that has visible frame lines, but may include the ones that have invisible frame lines as shown in Figs. 14 (b), (d), and (e). Furthermore, as shown in Figs. 14 (g) to (i), figures imitating a body without a head are used as the image within the frame, and the area where the head should exist can be defined as a "frame".

In Fig. 11, the face image clipping unit 12 clips only the image of the face area, which the face detecting unit 7 detects from the input image stored in the image storing unit 4.

The image composition unit 13 scales up or down the image of the face area, which the face image clipping unit 12 has clipped, according to the frame size. The image composition unit 13 inserts the image into the frame of the frame image and outputs the composite image to the image storing unit 4.

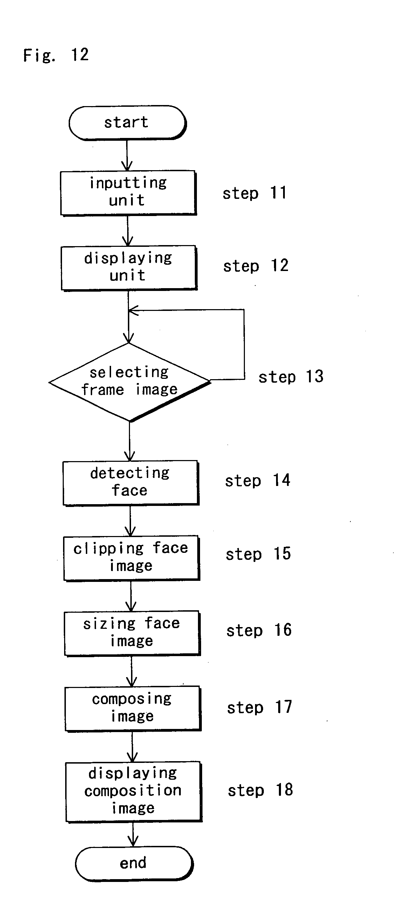

Next, the flow of the processing in the image processing apparatus according to the present embodiment is explained using Fig. 12.

In Step 11, the control unit 1 controls the image input unit 2 to store the input image in the image storing unit 4 via the image input unit 2 and the control unit 1.

In Step 12, the control unit 1 orders the display unit 10 to display the input image stored in the image storing unit 4, and the input image is displayed on the display unit 10.

In Step 13, the control unit 1 waits for the user to input information regarding which frame image should be used.

When the user uses the operation unit 3 and inputs the information, the control unit 1 orders the face detecting element 7 to perform detection for the face area in Step 14.

Thereby, the face detecting unit 7 detects the position and the size of the face area by using the templates stored in the template storing unit 6, and stores the detection result in the detection result storing unit 8.

When all the above processing is completed, in Step 15, the face image clipping unit 12 clips only the image of the face area from the input image, and outputs the image to the image composition unit 13.

In Step 16, the image composition unit 9 scales up or down the face image that is clipped according to the frame size of the frame image. In Step 17, the image composition unit 9 attaches the scaled face image to the frame and stores the composite image in the image storing unit 4. In Step 18, the control unit 1 orders the display unit 10 to display the composite image.

In Steps 15 to 17, clipping and scaling the face image may be performed in any order.

In advance of selecting the ornament, if the face detection is started by using time when the user thinks which ornament should be used (it is wasteful time for the information processing apparatus), the face detection seems for the user as if it has completed within a short period of time.

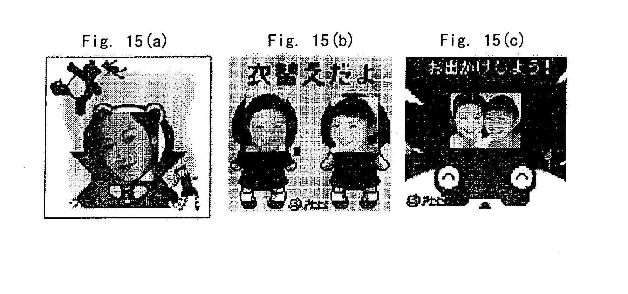

Fig. 15 (a) shows a resultant example that the face image is attached to the frame image shown in Fig. 13. As shown in Fig. 15 (b), plural frames can be provided and the face image can also be attached on each frame.

In the above discussion, composite image having one face per one frame is explained as an example. As for the face detection for a plurality of people, procedures described in the second half of the embodiment 1 can be applied. For example, when there are plural faces exist, as shown in Fig. 15 (b), it is preferable to determine a rectangle area that surrounds all the face images, to adjust the rectangle area so as to fit to one frame, and to perform the image composition. As a result, a plurality of face images is attached within the frame as shown in Fig. 15 (c).

Of course, the embodiment 1 and the embodiment 2 may be combined.

According to the present invention, the user can arrange the personal image at a suitable position in suitable size without complicated operations. Besides, the user can easily arrange only the face image within the frame of the frame image with suitable size. Therefore, the user can edit the personal image easily and interestingly.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

**Claims**

1. An image processing method comprising:

   establishing an inseparable relation between an ornament and arrangement information of the ornament in a body part area;
   setting a location of the body part area in an input image;
   setting arrangement of the ornament so as to fit with the set location of the body part area using the arrangement information related to the ornament;

composing the ornament and the input image to generate an ornament-arranged output image, and outputting the ornament-arranged output image.

**2.** An image processing method as defined in claim 1, further comprising:

setting a size of the body part area in the input image; and
fitting the ornament to the input image in size, based on the set size of the body part area.

**3.** An image processing method as defined in claim 1, wherein the ornament is treated in a form of an image file and the arrangement information of the ornament in the body part area is included in attribute information of the image file.

**4.** An image processing method as defined in claim 3, wherein the attribute information is placed in an extended region of the image file.

**5.** An image processing method as defined in claim 1, wherein the ornament is treated in a form of an image file and the arrangement information of the ornament in the body part area is included in a name of the image file.

**6.** An image processing method as defined in claim 1, wherein the ornament is treated in a form of an image file and the arrangement information of the ornament in the body part area is included in another file inseparably related to the image file.

**7.** An image processing method as defined in claim 1, wherein the arrangement information of the ornament in the body part area includes information of an ornament reference point.

**8.** An image processing method as defined in claim 2, wherein the arrangement information of the ornament in the body part area includes scaling information defining a relation between a size of the body part area and a size of the ornament.

**9.** An image processing method as defined in claim 1, wherein the body part area is a face area of a person photographic object.

**10.** An image processing method as defined in claim 7, wherein the ornament reference point is one of an upper left corner point, an upper side middle point, an upper right corner point, a left side middle point, the central point, the center of gravity, a right side middle point, a lower left comer point, a lower side middle point, and a lower right corner point.

**11.** An image processing method as defined in claim 1, wherein the ornament is at least one of an image expressing personal feelings and an image expressing personal belongings.

**12.** An image processing method comprising:

storing a frame image having a frame to compose a body part area;
setting a location of and a size of the body part area in an input image; and
outputting a composite image obtained by composing an image of the body part area and the frame of the frame image.

**13.** An image processing method as defined in claim 12, further comprising fitting the location and size-set image of the body part area to the frame in size.

**14.** An image processing method as defined in claim 12, wherein the frame image is treated in a form of an image file and arrangement information of the frame in the frame image is included in attribute information of the image file.

**15.** An image processing method as defined in claim 14, wherein the attribute information is placed in an extended region of the image file.

**16.** An image processing method as defined in claim 15, wherein the frame image is treated in a form of an image file and arrangement information of the frame in the frame image is included in a file name of the image file.

**17.** An image processing method as defined in claim 12, wherein the frame image is treated in a form of an image file and arrangement information of the frame is included in another file inseparably related to the image file.

**18.** An image processing method as defined in claim 12, wherein the arrangement information of the frame in the frame image includes information of a frame reference point.

**19.** An image processing method as defined in claim 13, wherein the arrangement information of the frame in the frame image includes magnification information defining a relation between a size of the body part area and a size of the ornament.

**20.** An image processing method as defined in claim 12, wherein the body part area is a face area of a person photographic object.

**21.** An image processing method as defined in claim 18, wherein the ornament reference point is one of an upper left comer point, an upper side middle point, an upper right comer point, a left side middle point, the central point, the center of gravity, a right side middle point, a lower left comer point, a lower side middle point, and a lower right comer point.

**22.** An image processing method as defined in claim 12, wherein the ornament is at least one of an image expressing personal feelings and an image expressing personal belongings.

**23.** An image processing apparatus comprising:

an image storing unit (4) operable to store an input image;
a template storing unit (6) operable to store at least one template of a body part area;
a detecting unit (7) operable to detect a location of and a size of the body part area out of the input image stored in said image storing unit (4), said detecting unit (7) using the at least one template of the body part area stored in said template storing unit (6);
an ornament information storing unit (5) operable to store ornament information of the ornament having a reference point; and
an image composition unit (9) operable to scale the ornament in accordance with the size of the body part area detected by said detecting unit (7), said image composition unit (9) operable to locate a reference point of the scaled ornament so as to fit with a position of the body part area detected by said detecting unit (7), and said image composition unit (9) further operable to compose the scaled ornament and the input image stored in said image storing unit (4).

**24.** An image processing apparatus as defined in claim 23, wherein the body part area is a face area of a person photographic object.

**25.** An image processing apparatus as defined in claim 23, wherein the ornament reference point is one of an upper left comer point, an upper side middle point, an upper right comer point, a left side middle point, the central point, the center of gravity, a right side middle point, a lower left comer point, a lower side middle point, and a lower right comer point.

**26.** An image processing apparatus as defined in claim 23, wherein the ornament is an image expressing personal feelings and/or an image expressing personal belongings.

**27.** An image processing apparatus comprising:

an image storing unit (4) operable to store an input image;
a template storing unit (6) operable to store at least one template of a face part area;
a detecting unit (7) operable to detect a location of and a size of the face part area out of the input image stored in said image storing unit (4), said detecting unit (7) using the at least one template of the face part area stored in said template storing unit (6);
a frame image storing unit (11) operable to store a frame image having a frame into which the face image is to be inserted, and
an image composition unit (13) operable to scale an image of the face part detected by said detecting unit (7) in accordance with a size of the frame, and said image composition unit (13) further operable to output a composite image after inserting the image of the face part detected by said detecting unit (7) into the frame of the frame image.

Fig. 1

```
                              ┌──────────────┐ 5
                              │   ornament   │
                              │ information  │
                              │ storing unit │
                              └──────────────┘
          ┌──────────┐ 2      ┌──────────────┐ 7      ┌──────────────┐ 6
          │  image   │        │    face      │        │template storing│
          │input unit│        │  detecting   │────────│    unit      │
          └──────────┘        │    unit      │        └──────────────┘
  ┌──────────┐ 3   ┌────────┐ 1      └──────────────┘ 8
  │operation │     │control │        ┌──────────────┐
  │  unit    │─────│  unit  │        │   detetion   │
  └──────────┘     └────────┘        │   result     │
                                     │ storing unit │
                   ┌────────┐ 4      └──────────────┘ 9
                   │ image  │        ┌──────────────┐
                   │storing │        │   image      │
                   │  unit  │        │  composing   │
                   └────────┘        │    unit      │
                                     └──────────────┘ 10
                                     ┌──────────────┐
                                     │ display unit │
                                     └──────────────┘
```

Fig. 2

```
    25
     ▽
     │  ┌──────────────┐ 26  ┌──────┐ 21  ┌──────┐ 22  ┌──────┐ 23  ┌──────────────┐ 24
     └──│communication │     │ CPU  │     │ RAM  │     │ ROM  │     │ flash memory │
        │ processing   │     └──────┘     └──────┘     └──────┘     └──────────────┘
        │    unit      │
        └──────────────┘
  ─────────┬───────────────┬──────────────┬──────────────┬──────────────────
    28     │               │              │              │
  ┌──────┐ │  ┌──────────┐ │              │   ┌──────────┐ 30   ┌──────────┐ 31
  │camera│─┤  │  image   │ │              │   │  audio   │      │microphone│
  └──────┘ │  │processing│ │   ┌──────┐ 33│   │processing│──────└──────────┘
  ┌──────┐ │  │  unit    │ │   │ I/F  │   │   │  unit    │      ┌──────────┐
  │ LCD  │─┘  └──────────┘ │   └──────┘   │   └──────────┘      │ speaker  │
  └──────┘                 │   │    │     │                     └──────────┘
    29        27       ┌───────┘    └───┐                          32
                       │  ┌──────┐      ┌──────┐
                       │  │key set│     │ port │
                       │  └──────┘      └──────┘
                          34              35
```

Fig. 3

```
          ┌──────────────┐
          │    start     │
          └──────┬───────┘
                 │
                 ▼
          ┌──────────────┐
          │  inputting   │     step 1
          │    image     │
          └──────┬───────┘
                 │
                 ▼
          ┌──────────────┐
          │  displaying  │     step 2
          │    image     │
          └──────┬───────┘
                 │
                 ▼
             ◇ selecting        step 3
             ◇ ornament ◇──N──┐
                 │ Y          │
                 ▼
          ┌──────────────┐
          │  detecting   │     step 4
          │    face      │
          └──────┬───────┘
                 ▼
          ┌──────────────┐
          │   storing    │
          │  detection   │     step 5
          │   result     │
          └──────┬───────┘
                 ▼
          ┌──────────────┐
          │   sizing     │     step 6
          │  ornament    │
          └──────┬───────┘
                 ▼
          ┌──────────────┐
          │  composing   │     step 7
          │    image     │
          └──────┬───────┘
                 ▼
          ┌──────────────┐
          │  displaying  │
          │ composition  │     step 8
          │    image     │
          └──────┬───────┘
                 ▼
          ┌──────────────┐
          │     end      │
          └──────────────┘
```

Fig. 4(a)

Fig. 4(b)

Fig. 4(c)

Fig. 5

Fig. 6

Fig. 7

Fig. 8

arrangement
information

Fig. 9(a)

Fig. 9(b)

Fig. 9(c)

Fig. 9(d)

Fig. 9(e)

Fig. 9(d)

Fig. 9(g)

Fig. 9(h)

Fig. 9(i)

Fig. 10

Fig. 11

Fig. 12

```
              ┌─────────────┐
              │    start    │
              └──────┬──────┘
                     │
              ┌──────▼──────┐
              │  inputting  │      step 11
              │    unit     │
              └──────┬──────┘
                     │
              ┌──────▼──────┐
              │  displaying │      step 12
              │    unit     │
              └──────┬──────┘
                     │
                     │◄──────────┐
                  ◄──▼──►        │
                ◄   selecting  ► ─┘   step 13
                  ◄ frame image►
                     │
              ┌──────▼──────┐
              │  detecting  │      step 14
              │    face     │
              └──────┬──────┘
                     │
              ┌──────▼──────┐
              │clipping face│      step 15
              │    image    │
              └──────┬──────┘
                     │
              ┌──────▼──────┐
              │ sizing face │      step 16
              │    image    │
              └──────┬──────┘
                     │
              ┌──────▼──────┐
              │  composing  │      step 17
              │    image    │
              └──────┬──────┘
                     │
              ┌──────▼──────┐
              │  displaying │      step 18
              │ composition │
              │    image    │
              └──────┬──────┘
                     │
              ┌──────▼──────┐
              │     end     │
              └─────────────┘
```

19

Fig. 13

Fig. 14(a)

Fig. 14(b)

Fig. 14(c)

Fig. 14(d)

Fig. 14(e)

Fig. 14(f)

Fig. 14(g)

Fig. 14(h)

Fig. 14(i)

Fig. 15(a)

Fig. 15(b)

Fig. 15(c)